Europäisches Patentamt

European Patent Office

Office européen des brevets

(19)

(11) Numéro de publication: **0 242 299**
**A1**

## DEMANDE DE BREVET EUROPEEN

(12)

(21) Numéro de dépôt: **87400860.0**

(22) Date de dépôt: **15.04.87**

(51) Int. Cl.⁴: **H 01 B 11/06**
**G 02 B 6/44**

(30) Priorité: **16.04.86 FR 8605443**

(43) Date de publication de la demande:
**21.10.87 Bulletin 87/43**

(84) Etats contractants désignés:
**BE CH DE ES GB IT LI NL SE**

(71) Demandeur: **AEROSPATIALE Société Nationale Industrielle**
**37, Boulevard de Montmorency**
**F-75781 Paris Cédex 16 (FR)**

(72) Inventeur: **Sainte Luce Banchelin, Jean**
**15, rue de l'Aste**
**F-33160 Saint Médard en Jalles (FR)**

**Valy, Yves**
**41, rue Edouard Branly**
**F-33160 Saint Médard en Jalles (FR)**

**Bourcereau, Jean**
**62, rue Berruer**
**F-33000 Bordeaux (FR)**

(74) Mandataire: **Mongrédien, André et al**
**c/o SOCIETE DE PROTECTION DES INVENTIONS 25, rue de Ponthieu**
**F-75008 Paris (FR)**

(54) **Gainage de protection de conducteurs électriques ou optiques, durci vis-à-vis des rayons X.**

(57) Gainage de protection de conducteurs électriques ou optiques, durci vis-à-vis des rayons X.

Ce gainage comprend une gaine souple (8) formée d'une matrice en résine, renfermant sous forme de poudre régulièrement dispersée, au moins un métal et/ou au moins un composé inorganique d'un métal, ce métal présentant un numéro atomique élevé au moins égal à 47, un revêtement (10) intercalé entre la fibre optique (2) et la gaine de protection contre les rayons X, formée d'au moins un élément de numéro atomique au plus égal à 6, et éventuellement une gaine de protection mécanique (12) en matière plastique recouvrant directement la fibre optique (2).

FIG. 2

EP 0 242 299 A1

**Description**

Gainage de protection de conducteurs électriques ou optiques durci vis-à-vis des rayons x

La présente invention a pour objet un gainage de protection d'un conducteur électrique ou optique ou d'un ensemble de conducteurs électriques ou optiques, ce gainage de protection étant durci vis-à-vis des rayons x. Elle s'applique dans tous les domaines où la protection vis-à-vis des rayonnements X des transmissions de signaux par conducteurs électriques ou optiques est nécessaire.

En particulier, l'invention s'applique à la protection de conducteurs électriques ou optiques, employés dans les domaines médical, nucléaire (centrales ou stations d'essais), aéronautique et spatial.

Par conducteurs électriques, il faut comprendre tous fils métalliques ou câbles spécialement conçus pour véhiculer des courants électriques tels que les câbles coaxiaux de téléphone, de télévision etc...

Par conducteurs optiques, on entend tous fibres optiques ou câbles optiques prévus pour véhiculer des signaux lumineux.

On rappelle qu'une fibre optique est une baguette très fine d'un matériau (verre de silice, borosilicate ou synthétique) étiré dont l'aspect filiforme lui confère une grande souplesse. Cette fibre optique constitue un guide de lumière.

De manière générale, une fibre optique est constituée d'un milieu diélectrique que l'on nomme coeur généralement recouvert d'un second milieu, nommé gaine optique dont l'indice de réfraction est inférieur à celui du coeur.

Toutefois, elle peut présenter des structures plus complexes et en particulier comporter plusieurs couches de gaines optiques, comme décrit dans le document FR-A-2 523 376.

Les conducteurs électriques et optiques sont très sensibles aux rayons X. Le parasitage se traduit, dans le cas des conducteurs optiques, par un obscurcissement et, dans le cas des conducteurs électriques, par un signal électrique perturbé.

Pour éviter ces effets indésirables, il est donc nécessaire d'abaisser le niveau d'irradiation de ces conducteurs en les protégeant contre les rayons X.

L'une des techniques les plus utilisées pour réduire les doses et débits de doses reçus par les conducteurs électriques et optiques, consiste à loger ces conducteurs dans des gouttières opaques aux rayons X. Ces gouttières sont généralement réalisées en un métal dont le numéro atomique est élevé.

Le métal et l'épaisseur des gouttières sont choisis et adaptés en fonction de l'énergie du rayonnement X considéré et du taux de filtrage désiré.

Ces gouttières métalliques assurent une protection très efficace contre les rayons X. Malheuresement, dans le cas de conducteurs électriques ou optiques embarqués sur aéronefs, ces gouttières métalliques sont beaucoup trop lourdes et encombrantes.

Par ailleurs, il est difficile de faire cheminer les conducteurs électriques ou optiques en dehors d'un circuit bien déterminé, établi en fonction des emplacements disponibles pour loger ces gouttières. Ces contraintes de positionnement font que ces gouttières sont très coûteuses.

En outre, la mise en oeuvre des métaux les plus intéressants pour assurer une protection efficace contre les rayons X est difficile, ce qui augmente encore le coût des gouttières.

Plus récemment dans le cas de conducteurs électriques, on a réalisé une gaine de protection contre les rayons X formée d'une, deux ou même trois tresses réalisées en un alliage d'un métal de numéro atomique élevé, recouvertes d'une couche d'argent. Ces gaines de protection sont disposées autour de la gaine isolante électriquement, entourant les conducteurs.

Malheureusement, la technique du tressage peut laisser des "trous" vis-à-vis des rayonnements X, ce qui crée une dispersion au niveau desdits rayonnements. De plus, elle est pénalisante en masse, ce qui peut être gênant au niveau des conducteurs électriques embarqués sur aéronefs.

Enfin, l'un des avantages des liaisons par fibres optiques est de permettre la liaison diélectrique entre boîtiers. Or, la technique de tressage fait perdre cet avantage.

La présente invention a justement pour objet un gainage de protection des conducteurs électriques ou optiques, durci vis-à-vis des rayons X, permettant de remédier aux différents inconvénients donnés ci-dessus. En particulier, ce gainage permet un gain de masse et d'encombrement important tout en assurant une protection efficace contre des rayonnements de fort débit de dose.

Par ailleurs, ce gainage de protection X ne pose pas de problème particulier de fabrication.

De façon plus précise, l'invention a pour objet un gainage de protection d'au moins un conducteur électrique ou optique, durci vis-à-vis des rayons X, caractérisé en ce qu'il comprend une gaine souple de protection contre les rayons X formée d'une matrice en résine, renfermant sous forme d'une poudre régulièrement dispersée, au moins un métal et/ou au moins un composé inorganique d'un métal, le métal présentant un numéro atomique élevé au moins égal à 47.

En particulier, la poudre peut être constituée d'un métal et d'un composé inorganique de ce même métal ou d'un autre métal.

L'intégration de la protection contre les rayons X à la structure du conducteur permet de réaliser des cheminements de ces conducteurs suivant des parcours individuels optimisés, par rapport à l'emploi des gouttières opaques.

Cette technique de gainage permet en outre une protection totale des conducteurs contre les rayonnements X, de la source à la destination de ces conducteurs, garantissant ainsi une "fermeture optique maximale" pour les conducteurs optiques et un anti-parasitage efficace pour les conducteurs électriques.

La gaine de protection X peut être obtenue en fondant une résine thermoplastique ou thermodurcissable, en mélangeant intimement la résine fondue avec la poudre d'un métal et/ou d'un composé inorganique d'un métal et en extrudant le mélange dans une filière dans laquelle défile le conducteur à protéger.

Ce procédé a l'avantage d'une mise en oeuvre simple et donne de très bon résultats quant à l'homogénéité de la gaine de protection X. On réalise ainsi lors de cette opération un bon centrage de la gaine de protection contre les rayons X par rapport au conducteur.

Dans le cas d'un conducteur optique, la gaine souple peut assurer à la fois le rôle de résistance mécanique et le rôle de protection contre les rayons X.

Toutefois, il est possible de prévoir une gaine de protection mécanique supplémentaire, en matière plastique souple. Cette protection mécanique recouvre la gaine de protection contre les rayons X, ou bien est située entre cette gaine de protection contre les rayons X et le conducteur optique.

De même, dans le cas d'un conducteur électrique, la gaine souple peut assurer la fonction d'isolation électrique et la fonction de protection contre les rayons X. Ceci est possible lorsque la matrice en résine et la poudre noyée dans cette résine sont de bons isolants électriques.

Inversement, lorsque la gaine souple est un mauvais isolant électrique, ce qui est en particulier le cas pour une poudre métallique, il est préférable d'utiliser une gaine isolante électriquement supplémentaire, afin d'assurer une protection électrique totale de ces conducteurs. Cette gaine isolante est soit disposée au-dessus de la gaine de protection contre les rayons X, soit entre cette gaine de protection X et le conducteur électrique.

La résine utilisée pour former la matrice de la gaine souple de protection contre les rayons X peut être une résine thermoplastique ou thermodurcissable souple telle qu'un élastomère. En particulier, on peut utiliser des polyamides, des polyéthers, des polyesters, des phénoplastes, des polyoléfines, des polyimides ou des silicones.

Afin d'assurer une souplesse suffisante des conducteurs électriques ou optiques gainés, on utilise de préférence une résine thermoplastique du type polyétherblockamide ou polyétherblockester ou une résine silicone.

La poudre métallique noyée dans la matrice organique de la gaine de protection X peut être une poudre d'argent, d'étain, d'antimoine, de baryum, d'une terre rare, de tantale, de tungstène, de rhénium, d'iridium, de platine, d'or, de plomb, d'uranium, d'hafnium ou un mélange de ces métaux.

Lorsque la poudre est constituée d'un composant inorganique, celle-ci peut être un oxyde, un nitrure ou un carbure d'un métal lourd tel que ceux cités ci-dessus.

De façon avantageuse, le métal ou le composé inorganique constituant la poudre dispersée dans la matrice présente une température de fusion supérieure ou égale à 630°C.

L'utilisation de matériau de température de fusion élevée permet d'éviter les effets indésirables dus aux chocs thermiques provoqués au sein du matériau lors d'une irradiation X, effets tels que la fusion superficielle des grains de la poudre, pouvant conduire à la destruction du matériau.

En particulier, pour une poudre métallique, on utilise de l'argent, du tantale, du tungstène ou de l'uranium.

De même, pour un composé inorganique, on utilise de préférence un oxyde, un nitrure ou un carbure d'argent, de tantale, de tungstène ou d'uranium si celui-ci existe effectivement.

Afin d'optimiser la protection contre les rayons X sur un spectre d'énergie très étendu, on peut utiliser un ou plusieurs métaux et/ou un ou plusieurs composés inorganiques pour former la poudre, comme par exemple un mélange de tungstène et d'oxyde d'uranium ($UO_2$), un mélange de tantale et d'oxyde d'uranium ou un mélange de baryum et d'hafnium.

A quantité égale de matériau de protection contre les rayons X, l'utilisation d'une poudre, répartie régulièrement dans une matrice en résine, amène une perte d'efficacité par rapport à une quantité de métal massif de nature indentique à la poudre utilisée, toute autre condition identique par ailleurs. Cette perte d'efficacité étant fonction essentiellement de la granulométrie de la poudre et de la quantité de poudre dans le liant organique, on choisit de préférence une poudre présentant une granulométrie allant de 0,5 à 25 micromètres, et par exemple allant de 1,6 à 10 micromètres.

De même, la quantité de poudre dans le liant peut aller de 25 à 50% en volume du matériau fini de protection contre les rayons X. La quantié de dopage du liant organique dans cette gamme est fonction de l'efficacité recherchée pour la protection X ainsi que de la souplesse souhaitée pour la gaine. Plus la quantité de poudre est élevée, plus la protection X est efficace mais moins la gaine est souple.

Afin d'eviter l'émission d'électrons, en particulier par la poudre de la gaine de protection X, lors d'une irradiation X, un revêtement formé d'au moins un élément de numéro atomique faible, au plus égale à 6, peut être intercalé entre le conductuer optique ou électrique et la gaine de protection contre les rayons X.

Ce revêtement présente une épaisseur supérieure au libre parcours moyen des électrons émis lors de l'irradiation X.

Comme élément de numéro atomique faible utilisable, on peut citer le carbone, le bore, et le béryllium.

Le matériau servant à empêcher les effets d'émissivité d'électrons est généralement connu sous le nom de matériau anti-SGEMP (System Generaling Electro Magnetic Pulse en terminologie anglo-saxonne). Il peut se présenter sous la forme d'une peinture renfermant des particules de l'élément de numéro atomique au plus égal à 6.

D'autre caractéristiques et avantages de l'invention ressortiront mieux de la description qui va suivre, donnée à titre illustratif et non limitatif, en référence aux figures annexées, dans lesquelles :
- les figures 1 à 3 représentent schématiquement, en coupe transversale, trois variantes de réalisation du gainage de protection selon l'invention d'une fibre optique,

- la figure 4 représente schématiquement, en coupe transversale, un faisceau de fibres optiques gainé selon l'invention,

- les figures 5 et 6 représentent schématiquement, en coupe transversale, deux variantes de réalisation du gainage de protection selon l'invention de conducteurs électriques,

- la figure 7 représente schématiquement, en coupe transversale, un ensemble de câbles électriques gainé selon l'invention, et

- la figure 8 représente schématiquement, une installation permettant le gainage en continu d'un conducteur par la gaine souple de protection contre les rayons X conformément à l'invention.

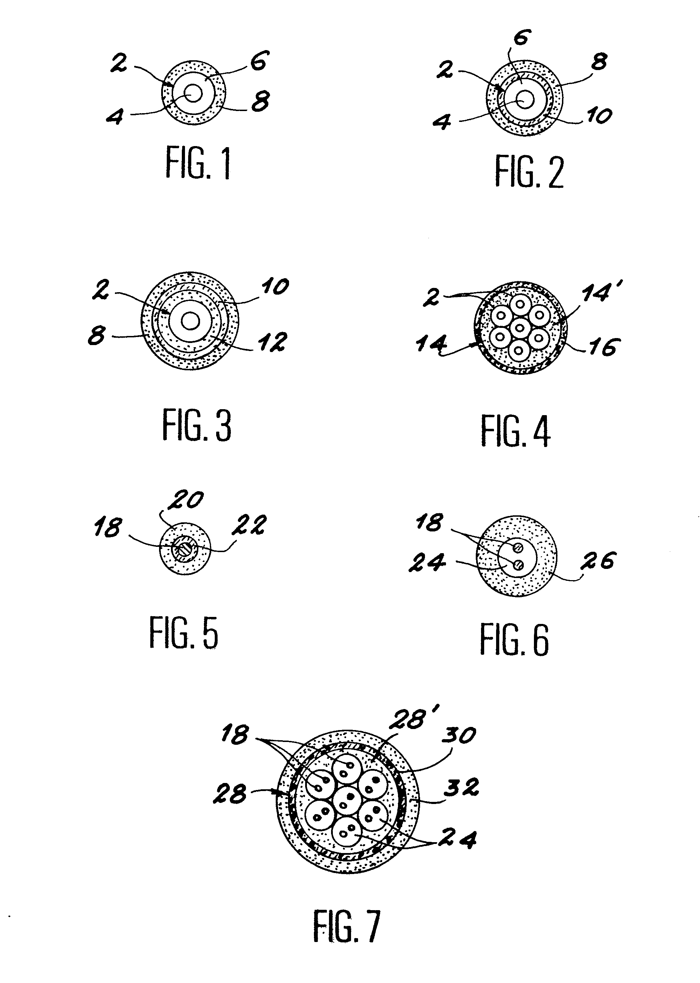

Sur les figures 1 à 3, on a représenté en coupe transversale, une fibre optique 2 qui peut être réalisée soit en verre, soit en matière plastique. Cette fibre optique 2 comprend un matériau de coeur 4 et une gaine optique 6 dont l'indice de réfraction est inférieur à celui du matériau de coeur.

Cette fibre optique 2 peut être l'une de celles décrites dans les documents FR-A-2 523 316, FR-A-2 194 975, FR-A-2 382 155, EP-A-0 045 345, EP-A-0 093 395, EP-A-0 110 445, etc.

La fibre optique 2 est recouverte d'une gaine 8 souple assurant la protection contre les rayons X. Cette gaine 8 recouvre totalement la gaine optique 6 de la fibre 2, d'une extrémité à l'autre de la fibre.

Cette gaine 8 de protection X est par exemple formée d'une poudre de tungstène, représentant 30% en volume de la gaine, régulièrement répartie, dans une matrice en résine thermodurcissable souple telle qu'une silicone. Cette résine silicone est par exemple celle vendue par la Société Rhône Poulenc sous la référence RTV 1502 dont la polymérisation est catalysée par RTV 1502B de Rhône Poulenc. La poudre de tungstène présente une pureté de 99,9%, une granulométrie moyenne de 4 micromètres et une dispersion de 2,5.

Cette gaine 8 de protection X est relativement souple puisqu'elle présente un allongement à la rupture supérieur à 50%. Elle présente une épaisseur d'environ 1 mm afin d'assurer une protection X efficace.

La gaine 8 de protection X peut aussi être constituée d'une poudre de tungstène, représentant 30% du volume de la gaine, dispersée dans une résine DINYL de chez Rhône-Poulenc. Cette résine est un polyétherblockamide, thermoplastique. La poudre de tungstène utilisée a les mêmes propriétés que ci-dessus.

On peut aussi remplacer la résine DINYL par la résine HYTREL de chez Dupont de Nemours. Cette dernière est un polyétherblockester, thermoplastique.

La gaine 8 de protection X peut aussi être constituée d'une poudre contenant en volume 6% de tungstène et 24% d'oxyde d'uranium (UO$_2$) noyée dans la résine PEBAX de chez ATOCHEM. Cette résine est une résine polyétherblockamide. Cette gaine 8 peut présenter une épaisseur de 2 mm afin d'assurer un filtrage des rayons X efficace pour une application donnée.

Afin d'éviter l'émission d'électrons notamment par la gaine souple 8, lors d'une irradiation X, on interpose, entre la gaine optique 6 de la fibre 2 et la gaine 8 de protection X un revêtement 10, comme schématisé sur les figures 2 et 3.

Ce revêtement 10, assurant la fonction anti-SGEMP, recouvre entièrement la gaine optique 6. Elle peut être notamment réalisée en béryllium ou en carbone. Ce revêtement 10 présente une épaisseur supérieur au libre parcours moyen des électrons émis notamment par la gaine 8 lors d'une irradiation X, soit une épaisseur de l'ordre de quelques micromètres à quelques dizaines de micromètres.

Sur les figures 1 et 2, la gaine 8 assure, en plus de la fonction protection contre les rayons X, la fonction de résistance mécanique. Toutefois, il est possible, comme représenté sur la figure 3, de revêtir la fibre optique 2 d'une gaine 12 en matière plastique assurant la fonction résistance mécanique.

Cette gaine mécanique 12, comme représentée sur la figure 3, est généralement au contact direct de la gaine optique 6 de la fibre optique, et en particulier, intercalée entre la gaine optique 6 et le revêtement 10 anti-SGEMP.

Toutefois, il est possible de disposer cette gaine de protection mécanique 12 à l'extérieur de la gaine souple 8 de protection X.

Le gainage de protection décrit ci-dessus peut aussi être utilisé dans le cas d'un ensemble de fibres optiques, comme représenté sur la figure 4.

Sur cette figure, on a représenté un faisceau 14 de fibres optiques 2, identiques à celles représentées sur les figures 1 à 3. Le faisceau 14 fait l'objet d'une mise au rond par extrusion avec une silicone. Ainsi mis au rond le faisceau 14' est recouvert d'une gaine souple 16 assurant la protection contre les rayons X des fibres 2 du faisceau. Cette gaine 16 présente la même composition que celle décrite précédemment pour la gaine 8 de protection X.

La gaine 16 recouvrant entièrement le faisceau 14 de fibres peut être utilisée seule pour assurer à la fois la protection mécanique et la protection contre les rayons X ou bien être utilisée en combinaison avec une gaine mécanique et éventuellement un revêtement anti-SGEMP tels que décrits précédemment.

Sur la figure 5, on a représenté un fil électrique 18 notamment en cuivre, entouré d'une gaine souple 20 assurant à la fois la protection contre les rayons X et l'isoltion électrique du fil 18. Cette gaine 20 peut être réalisée en une résine silicone renfermant du tungstène représentant 30% en volume de la gaine.

Afin d'éviter l'émissivité d'électrons, notamment par la gaine de protection 20, il est possible d'intercaler entre la gaine souple 20 et le conducteur 18 un revêtement 22 assurant la fonction anti-SGEMP. Ce revêtement 22 peut être réalisé comme décrit précédemment.

Sur la figure 6, on a représenté deux fils électriques 18 isolés électriquement l'un de l'autre par une gaine plastique 24, notamment en silicone ou époxy. Cette gaine isolante électriquement est recouverte d'une gaine 26, assurant la protection contre les rayons X des fils 18 et réalisée notamment comme la gaine 8 (figures 1-3).

Sur la figure 7, on a représenté un ensemble 28 de câbles électriques 18 isolés électriquement et mis au rond comme dans le cas de la figure 4. Cet ensemble 28' de câbles électriques est recouvert d'un revêtement 30 assurant la fonction de anti-SGEMP et d'une gaine souple 32 assurant la fonction de protection contre les rayons X. Les gaines 24 assurent l'isolation des fils 18.

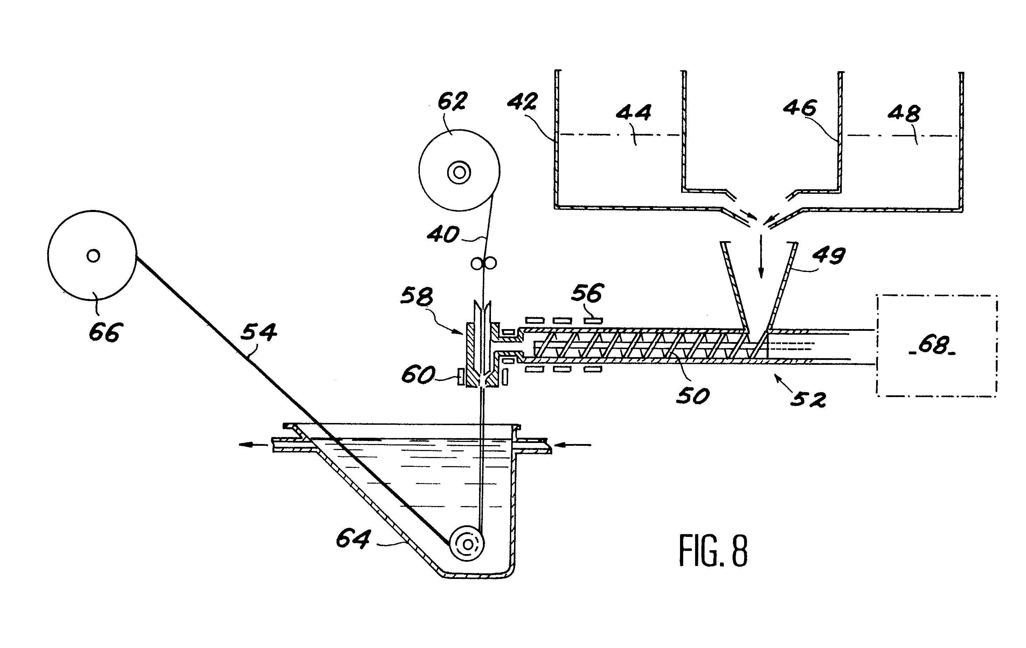

Sur la figure 8, on a représenté schématiquement une installation permettant le gainage en continu d'un conducteur électrique ou optique 40.

Cette installation, de type connu, comprend un doseur 42 contenant des grains 44 d'une résine thermoplastique et en particulier une résine polyétherblockamide. De même, un doseur 46 est prévu pour contenir de la poudre de tungstène 48.

Ces doseurs 42 et 46 sont étalonnés de façon à alimenter continuellement, via une trémie 49, la vis 50 d'une extrudeuse 52 du type extrudeuse-mélangeuse WERNER ZSK 30,à des débits dont les proportions relatives assurent le taux de poudre de tungstène dans le matériau de gainage 54 de protection X.

La partie inférieure de l'extrudeuse est équipée de résistances 56 servant à fondre les grains 44 de résine thermoplastique.

Le bas de l'extrudeuse 52 est couplé à une filière de gainage 58 équipée aussi de résistance 60 assurant la mise en chauffre de la filière 58.

Les résistances 56 et 60 sont généralement portées à une température permettant le ramollissement de la résine soit 200°C ± 10°C pour le PEBAX par exemple.

Le conducteur 40 à revêtir de la gaine de protection 54 contre les rayons X est monté sur une bobine émettrice 62, traverse la filière 58 chauffée et un bac 64 contenant de l'eau servant à refroidir le conducteur muni de la gaine 54, puis est reçu sur une bobine 66 réceptrice.

Une fois les températures de travail (220°C) atteintes, la vis 50 de l'extrudeuse 42 est mise en rotation à l'aide d'un moteur 68 et est alimentée en poudre par des doseurs 42 et 46. Le conducteur 54 est alors entraîné par la bobine réceptrice 66 à une vitesse de l'ordre de 15 cm/s.

Dans ces conditions, un débit de 1,59 kg/h de grains de résine thermoplastique et un débit de 12,8 kg/h de poudre de tungstène permettent d'obtenir une gaine de protection contre les rayons X de 1 mm d'épaisseur et contenant 30% en volume de tungstène, ce qui permet pour une fibre de 0,5mm de diamètre (gaine de protection mécanique comprise), d'obtenir une fibre optique gainée, protégée contre les rayons X, de 2,5 mm de diamètre.

Cette élaboration de la gaine 54 de protection X du conducteur 50 permet une bonne homogénéisation du matériau la constituant.

Comme autre dispositif permettant un gainage de protection X selon l'invention, on peut citer ceux décrits dans les documents US-A-4 480 898, US-A-3 960 530, FR-A-2 536 544 et FR-A-2 359 693.

La description donnée précédemment n'a bien entendu été donnée qu'à titre illustratif ; des modifications, sans pour autant sortir du cadre de l'invention pouvant être envisagées.

Les conducteurs électriques ou optiques équipés d'un gainage de protection selon l'invention peuvent être utilisés partout où ces conducteurs doivent être protégés contre les rayons X et plus spécialement en cas d'ambiance mécanique et climatique sévère. En particulier, l'invention s'applique lorsqu'il est requis des conditions de masse et d'enconbrement minimum. En effet, elle permet d'obtenir des conducteurs pour lesquels la protection X est intégrée à la structure du conducteur.

Les conducteurs optiques et électriques gainés selon l'invention permettent, à efficacité de filtrage équivalente à celle des gouttières métalliques, un gain de masse et d'encombrement ainsi qu'une diminution des coûts de fabrication. Ceci permet d'utiliser les conducteurs protégés selon l'invention sur des aéronefs.

**Revendications**

1. Gainage de protection d'au moins un conducteur électrique (18) ou optique (2), durci vis-à-vis des rayons X, caractérisé en ce qu'il comprend une gaine souple (8, 16, 20, 26, 32) de protection contre les rayons X formée d'une matrice en résine, renfermant sous forme d'une poudre régulièrement dispersée, au moins un métal et/ou au moins un composé inorganique d'un métal, le métal présentant un numéro atomique élevé au moins égal à 47.

2. Gainage de protection selon la revendication 1, caractérisé en ce que la poudre ne fond qu'à température au moins égale à 630°C.

3. Gainage de protection selon la revendication 1 ou 2, caractérisé en ce que la poudre représente 25 à 50% en volume de la gaine souple.

4. Gainage de protection selon l'une quelconque des revendications 1 à 3, caractérisé en ce que la gaine souple présente un allongement à la rupture supérieur à 50%.

5. Gainage de protection selon l'une quelconque des revendications 1 à 4, caractérisé en ce que la résine est une résine silicone, polyétherblockamide ou polyétherblockester.

6. Gainage de protection selon l'une quelconque des revendications 1 à 5, caractérisé en ce que le métal de numéro atomique élevé est choisi parmi l'argent, le tantale, le tungstène et l'uranium.

7. Gainage de protection selon l'une quelconque des revendications 1 à 6, caractérisé en ce qu'il comprend un revêtement (10, 22, 30) intercalé entre le conducteur (2, 18) et la gaine souple de protection X (8, 20, 32) formé d'au moins un élément de numéro atomique faible, au plus égal à 6.

8. Gainage de protection selon la revendication 7, caractérisé en ce que l'élément de numéro atomique faible est choisi parmi le carbone, le bore et le béryllium.

9. Gainage de protection selon l'une quelconque des revendications 1 à 8, caractérisé en ce qu'il comprend une gaine (12) de protection mécanique en matière plastique recouvrant directement le conducteur, ce dernier étant un conducteur optique (2).

10. Gainage de protection selon l'une quelconque des revendications 1 à 8, caractérisé en ce qu'il comprend une gaine (24, 34) isolante électriquement recouvrant directement le conducteur (18), celui-ci étant un conducteur électrique.

0242299

FIG. 1

FIG. 2

FIG. 3

FIG. 4

FIG. 5

FIG. 6

FIG. 7

FIG. 8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 484 688  (ETAT FRANCAIS)<br>* Page 1, lignes 1-18; page 6, ligne 18 - page 10, ligne 7; figures 1-5 * | 1,5,10 | H 01 B  11/06<br>G 02 B   6/44 |
| A | | 2,7,8 | |
| | --- | | |
| Y | US-A-3 576 387  (M.J. DERBY)<br>* Revendications 1,4,5,12; figures 2,3 * | 1,5,10 | |
| A | | 2,6 | |
| | --- | | |
| A | PATENT ABSTRACTS OF JAPAN, vol. 8, no. 129 (P-280)[1566], 15 juin 1984; & JP-A-59 33 405 (FUJIKURA DENSEN K.K.) 23-02-1984 | 1,5 | |
| | ----- | | |

DOMAINES TECHNIQUES RECHERCHES (Int. Cl.4)

H 01 B
G 02 B
H 05 G

Le présent rapport de recherche a été établi pour toutes les revendications

| Lieu de la recherche | Date d'achèvement de la recherche | Examinateur |
|---|---|---|
| LA HAYE | 21-07-1987 | DEMOLDER J. |